# EUROPEAN PATENT APPLICATION

(11) **EP 0 577 409 A1**
(43) Date of publication of application: **05.01.1994**
(21) Application number: 93305114.6
(22) Date of filing: 30.06.1993
(51) Int. Cl.: B29C 67/14, B29C 53/58, B29C 53/82, F16C 3/02, B62K 19/16

(54) **Pipe-like fiber-reinforced plastic structural material and method of manufacturing the same**

(30) Priority: 30.06.1992 JP 196397/92
(71) Applicant: Tonen Corporation, Tokyo (JP)
(72) Inventor: Sugiyama, Tetsuya, c/o Tonen Corporation, Oi-machi, Iruma-gun, Saitama-ken (JP)
(74) Representative: Greenwood, John David

(57) **Abstract**

A light weight, high mechanical strength fiber-reinforced pipe-like plastic structural material comprises a fiber-reinforced plastic pipe body and end reinforcement layers of a fiber-reinforced plastic material each provided in the inner periphery of each end portion of the pipe body. An end member of a metal, having a desired shape, can be fitted in each end of the pipe. The end reinforcement layers have an inclined inner end surface with the inner diameter thereof progressively increasing as one goes inward in the axial direction.

The ends of the pipe can be reinforced without spoiling its light weight feature and also without reducing its mechanical strength.

## Description

This invention relates to a light weight, high strength pipe-like fiber-reinforced plastic structural material which may be used for pipe materials in the fields of sport leisure such as bicycle frames as well as pipe materials in the fields of construction and civil engineering, fields of machines and various other technical fields.

Recently, fiber-reinforced plastic pipes are finding extensive applications to bicycle frames, for instance, because of their light weight and high strength.

Usually, an end member made of a metal is fitted in each end of such fiber-reinforced plastic pipe for connecting such pipes end to end, that is, such pipes are connected and assembled by using such end members. The end member is pressure fitted in the inner periphery of the end of the fiber-reinforced plastic pipe and secured thereto by using an adhesive. However, the fiber-reinforced plastic pipe has low circumferential modulus of elasticity compared to the end member made of a metal. Therefore, when or after pressure fitting the end member, the end portion of the fiber-reinforced plastic pipe is pushed from the inside and spread by the load transmitted from the end member. Such spread may cause generation of fissures in the end portion of the fiber-reinforced plastic pipe. A pipe with such a fissure generated in it can not be used. Further, the spread noted above may cause rupture of the adhesive securing the pipe end portion and end member to each other. When this occurs, the adhesive can no longer sufficiently provide its function.

It has been in practice to provide a reinforcement layer of a fiber-reinforced plastic material on the outer periphery of the fiber-reinforced plastic pipe end portion. In this case, the pipe outer diameter is increased in the end portions of the pipe, which is undesired where uniform pipe outer diameter is required.

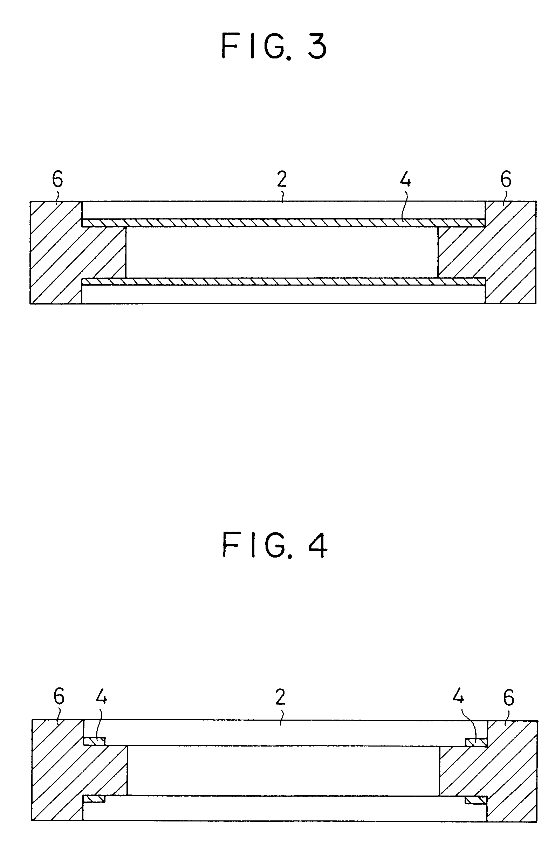

To meet the uniform pipe outer diameter demand, it has been proposed to provide a reinforcement layer 4 on the inner periphery of the fiber-reinforced plastic pipe body 2 over the entire length of the pipe in its axial direction as shown in Fig. 3 or provide a reinforcement layer 4 comprising a fiber-reinforced plastic material or a metal ring on the inner periphery of only each end portion of the fiber-reinforced plastic pipe body 2 as shown in Fig. 4 (see, for instance, Japanese Patent Application Laid-Open No.1-93331, and Japanese Patent Application Laid-Open No. 1-289782).

However, in the method of Fig. 3, portions of the pipe body 2 other than those requiring the reinforcement is provided with reinforcement, thus spoiling the light weight feature of the fiber-reinforced plastic pipe. In the method of Fig. 4, on the other hand, points of discontinuity of reinforcement fibers are produced inside the fiber-reinforced plastic pipe body 2 to reduce the mechanical strength thereof. Therefore, rupture of the pipe is liable.

The invention has an object of providing a light weight, high mechanical strength pipe-like fiber-reinforced plastic structural material, which has its end portions reinforced without spoiling the light weight feature and also without mechanical strength reduction.

The above object is accomplished by a light weight, high strength pipe-like fiber-reinforced plastic structural material of the invention. In brief, the present invention relates to a light weight, high strength pipe-like fiber-reinforced plastic structural material which comprises a fiber-reinforced plastic pipe body, end members of metal each fitted in each end of the pipe body, and end reinforcement layers of a fiber-reinforced plastic material each provided on the inner periphery of each end portion of the pipe body, the end reinforcement layers having a predetermined thickness and an axial dimension equal to or slightly greater than the axial dimension of the fitted portion of the end members, the end reinforcement layers having an inclined inner end portion with the inner diameter thereof progressively increasing as one goes inward in the axial direction.

In a preferred form of the invention, the degree of inclination of the inclined end portion of the the end reinforcement layers is in a range of 1/1,000 to 1/10.

The reinforcement fibers in the fiber-reinforced plastics of the fiber-reinforced plastic pipe body and end reinforcement layers are one or more fibers selected from the fibers consisting of inorganic fibers, e.g., carbon fibers, boron fibers, glass fibers, alumina fibers, silicon carbide fibers, silicon nitride fibers, etc., organic fibers, e.g., aramid fibers, polyallylate fibers, polyethylene fibers, polyester fibers, etc., and metal fibers, e.g., titanium fibers, amorphous fibers, stainless steel fibers, etc. The fiber-reinforced plastic of the end reinforcement layers may incorporate the same or different reinforcement fibers as or from those in the fiber-reinforced plastic pipe body.

The fiber-reinforced plastic of the end reinforcement layers suitably incorporates at least reinforcement fibers oriented at ± (80 to 90)° with respect to the axial direction.

The pipe-like fiber-reinforced plastic structural material mentioned above is suitably produced by a method comprising the steps of:
(a) preparing a mandrel and winding a releasable tape thereon to form a tape winding having a central portion with a predetermined thickness and inclined end portions with the thickness thereof reducing progressively as one goes outward in the axial direction;
(b) subsequently winding a fiber-reinforced prepreg on the inclined end portions of the tape winding formed on the mandrel and outer portions thereof adjacent the inclined end portions to the same outer diameter as the central portion of the tape winding, thus forming end reinforcement layers having a predetermined axial dimension;
(c) then winding a fiber-reinforced prepreg to a predetermined thickness on the end reinforcement layers and the exposed central portion of the tape winding, thus forming a pipe body; and
(d) then thermally setting the matrix resin in the fib er-reinforced prepregs, withdrawing the mandrel from the hardened fiber-reinforced plastic materials and removing the tape of the tape winding from the inside of the hardened fiber-reinforced plastic material. The releasable tape is suitably made of a thermoplastic resin, e.g., polypropyrene, polyethylene, PET, Teflon., etc.

An embodiment of the invention will now be described, by way of example only, with reference to the accompanying drawings of which:
Fig. 1 is an axial sectional view showing an embodiment of the fiber-reinforced plastic pipe according to the invention;
Fig. 2 is a view illustrating the process of manufacture of the embodiment of the fiber-reinforced plastic pipe according to the invention:
Fig. 3 is an axial sectional view showing a prior art fiber-reinforced plastic pipe; and
Fig. 4 is an axial sectional view showing a different prior art fiber-reinforced plastic pipe.

A pipe-like fiber-reinforced plastic structural material according to the invention will now be described in more detail with reference to the drawings.

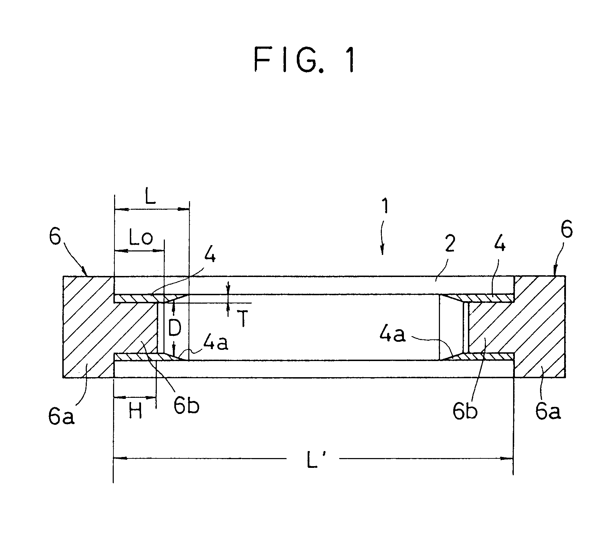

Fig. 1 shows a fiber-reinforced plastic pipe 1 in the form of a straight pipe which is an embodiment of the pipe-like fiber-reinforced plastic structural material of the invention. In this embodiment, the fiber-reinforced plastic pipe 1 comprises a fiber-reinforced plastic pipe body 2 and an end reinforcement layer 4 of a fiber-reinforced plastic material provided on the inner periphery of each end portion of the pipe body 2. A metal end member 6 having a desired shape is fitted in each end portion of the pipe body 1. In this embodiment, the end member 6 has a large diameter portion 6a having the same diameter as the outer diameter of the pipe body 2 and a small diameter portion 6b fitted in the bore of the end reinforcement layer 4.

The end reinforcement layer 4, particularly, a portion of the layer 4 that engages with the small diameter portion 6b of the end member 6, has a predetermined thickness T, and the length (i.e., axial dimension) L₀ of the portion with the thickness T is equal to or slightly greater than the length H of the small diameter portion 6b of the end member 6 (L₀ ≧ H). According to the invention, the end reinforcement layer 4 has an inwardly flaring end surface 4a, which is inclined such that its inner diameter D increases as one goes inward in the axial direction. That is, the inner end surface 4a of the end reinforcement layer 4 flares such that its inner diameter D increases progressively from the outer diameter of the small diameter portion 6b of the end member 6 toward the inner diameter of the pipe body 2 as one goes inward in the axial direction, that is, such that the thickness T of the end reinforcement layer 4 becomes substantially zero. That is, the inner end surface 4a of the end reinforcement layer 4 is an inclined end surface.

The inclined inner end surface of the end reinforcement layer 4 has an effect that when or after pressure fitting the end member the stress due to the load transmitted from the end member can be dispersed over the inclined inner end surface of the end reinforcement member 4. It is thus possible to avoid stress concentration.

The degree of inclination of the inclined inner end surface can be selected as desired, but usually, T/(L - L₀) is suitably 1/1,000 to 1/10.

The fiber-reinforced plastics of the pipe body 2 and end reinforcement layers 4 may use the same reinforcement fibers or different reinforcement fibers. The reinforcement fibers of the fiber-reinforced plastics are most suitably carbon fibers. Among the reinforcement fibers that can be used are inorganic fibers, e.g., boron fibers, glass fibers, alumina fibers, silicon carbide fibers, silicon nitride fibers, etc., organic fibers, e.g., aramid fibers, polyallylate fibers, polyethylene fibers, polyester fibers, etc., and metal fibers, e.g., titanium fibers, amorphous fibers, stainless steel fibers, etc. These reinforcement fibers may be used either alone or in hybrid forms consisting of a plurality of different fibers. The reinforcement fibers may be incorporated such that they are disposed in one direction, or in the form of a cloth. The reinforcement layer 4 suitably incorporates at least reinforcement fibers oriented at ± (80 to 90)° with respect to the axial direction to provide an enhanced reinforcement effect.

The reinforcement fibers are impregnated with a matrix resin, which may be selected from thermosetting matrix resins, e.g., epoxy resin, unsaturated polyester resin, polyurethane resin, diallylphthalate resin, phenol resin, etc. Further, to provide a setting temperature of 50 to 200°C a hardening agent and other additives, e.g., a flexibility imparting agent, are added adequately.

A suitable example of the matrix resin is epoxy resin. Suitable examples of the epoxy resin that can be used are: (1) glycidyl ether type epoxy resins (e.g., bisphenol A, F, S type epoxy resin, novolak type epoxy resin, brominated bisphenol A type epoxy resin, etc.); (2) cyclic aliphatic epoxy resins; (3) glycidyl ester type epoxy resins; (4) glycidyl amine type epoxy resin, tetraglycidyl-aminodiphenylmethane, triglycidyl-p-aminophenol, etc.; (5) complex cyclic epoxy resins; and various other epoxy resins. These epoxy resins may be used alone or in suitable combinations. Particularly suitable for use are bisphenol A, F, S glycidyl amine type epoxy resins. As the hardening agent may be used those of amine type, e.g., dicyandiamide (DICY), diaminodiphenyl sulfon (DDS) and diaminodiphenyl methane (DDM), etc., and those of acid anhydride type, e.g., hexahydrophthalic acid anhydride (HHPA), methylhexahydrophthalic acid anhydride (MHHPA), etc. Particularly, the amine type hardening agent is suitably used.

The composition ratio between the reinforcement fibers and the matrix resin in the fiber-reinforced plastics forming the pipe body 2 and end reinforcement layers 4 are adjustable as desired. Usually, however, the ratio of the reinforcement fibers to the matrix resin is (40 to 60) : (60 to 40) in weight %. The thickness and the like of the fiber-reinforced plastic materials of the pipe body 2 and end reinforcement layers 4 can be selected as desired in dependence on the use of the pipe.

While the above embodiment of the fiber-reinforced plastic pipe 1 according to the invention has been described as a straight pipe, this is by no means limitative, and the invention is applicable to various forms of pipe-like structural materials such as curved pipes and tapered pipes.

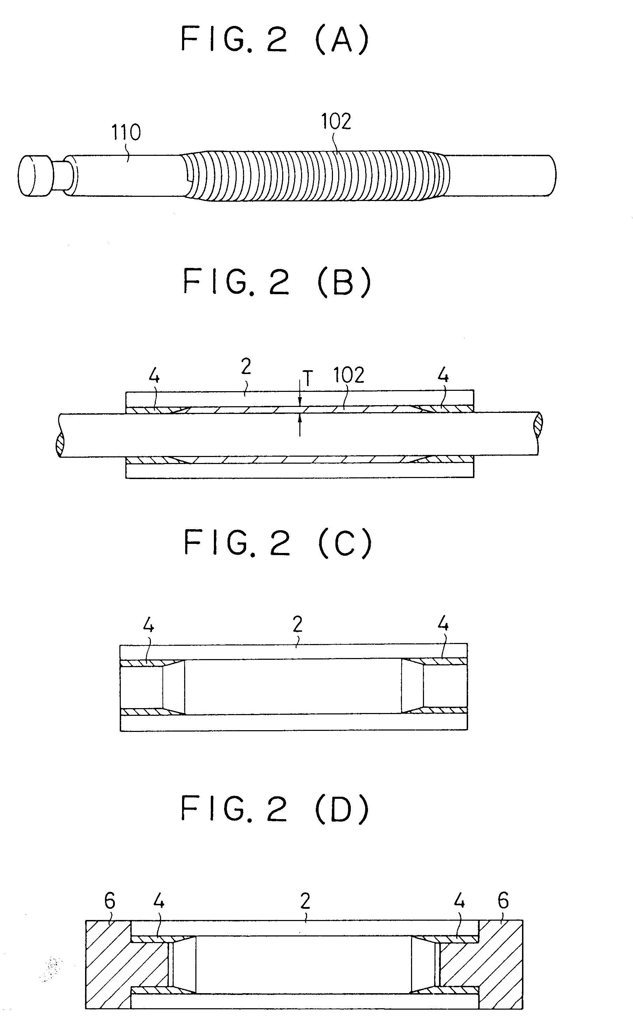

The method of manufacturing the pipe-like fiber-reinforced plastic structural material according to the invention, particularly the straight fiber-reinforced plastic pipe 1 shown in Fig. 1, will now be described with reference to Fig. 2.

First, a mandrel 100 is prepared, and then a releasable tape, usually having a thickness of 10 to 50 µm and a width of 5 to 50 mm, is wound with such a tensile force that it is not plastically deformed and to a predetermined thickness T on a portion of the mandrel 100 that corresponds to a portion of the fiber-reinforced plastic pipe 1 not requiring reinforcement, i.e., a central portion of the pipe body 2, thus forming a tape winding 102. The tape winding 102 is formed on the mandrel 100 such that the thickness T of its opposite end portions is reduced progressively as one goes outward in the axial direction. Thus, the tape winding 102 has an inclined surface at each end (Fig. 2A).

The tape material is suitably a thermoplastic resin, e.g., polypropyrene, polyethylene, PET, Teflon, etc. if the matrix resin used for the fiber-reinforced plastic is thermosetting.

Subsequently, a fiber-reinforced prepreg is wound over a predetermined axial length on the portions of the mandrel 100 that require reinforcement, i.e., each end of the tape winding 102 formed on the mandrel 100 and adjacent outer portions of the tape winding 102, which correspond to the end portions of the pipe body 2, so that the end reinforcement layers 4 are formed (Fig. 2B). The outer diameter of the end reinforcement layers 4 is made the same as that of the tape winding 102.

The reinforcement fibers in the end reinforcement layers 4 suitably are disposed in a direction at ± (80 to 90) ° with respect to the axial direction of the mandrel 100 as noted above.

Further, fiber-reinforced prepreg is wound to a predetermined thickness covering the outer peripheries of the end reinforcement layers 4 and tape winding 102 to obtain a bending rigidity and torsional rigidity suited for use, thus obtaining the pipe body 2 (Fig. 2B).

Then, the individual prepregs are additionally tightened by winding a heat-resistant tape on the pipe body 2, and thereafter the matrix resin is set by a heat treatment. When the setting of the matrix resin has been completed, the mandrel 100 is withdrawn from the fiber-reinforced plastic pipe. Then, the heat-resistant tape wound on the outer periphery of the pipe body 2 and the tape forming the tape winding 102 are removed.

At this time, since the tape of the tape winding 102 is releasable, it can be readily separated and removed from the inner periphery of the fiber-reinforced plastic pipe (Fig. 2C).

End members are then each inserted into each end of the fiber-reinforced plastic pipe thus obtained (Fig. 2D).

By the above method of manufacture, opposite end portions of the pipe may be provided with the reinforcement layers on the side of the inner diameter portion thereof by making the inner diameter of the opposite end portions of the pipe body 2 smaller than that of the central portion thereof. Further, the method may be used to produce either a straight pipe or a tapered pipe. Particularly, in the case of producing such straight pipe it is possible to form a plurality of pipes at a time with a single mandrel.

Further, the length of the end reinforcement layer 4 may be set as desired. Also, the the thickness of the layer 4 and the degree of inclination of the inclined end surface of the layer 4 may be set as desired in dependence on the required strength by appropriately setting the width, thickness and winding pitch of tape-like film.

The invention will now be described with reference to Examples.

### Example 1

The fiber-reinforced plastic pipe was produced in accordance with the method of manufacture according to the invention as described before in connection with Fig. 2.

More specifically, there was prepared a mandrel 100 having an outer diameter of 32 mm. A polypropyrene tape having a thickness of 30 µm and a width of 25 mm was wound at a pitch of 1.5 mm on the mandrel. The tape winding 102 formed on the mandrel 100 had a length of 200 mm, and its opposite inclined end surfaces had a length of 25 mm. That is, the other portion of the tape winding than the opposite inclined end portions had a length of 150 mm and a thickness T of 0.5 mm.

Then, a carbon fiber-reinforced prepreg was wound on the inclined end portions of the tape winding 102 on the mandrel 102 and adjacent outer portions thereof such that the reinforcement fibers are disposed at an angle of 90 ° with respect to the axial direction of the mandrel, thus forming end reinforcement layers 4 each having a length of 75 mm and the same outer diameter as that of the central portion of the tape winding 102 so that there was no step between the end reinforcement layers 4 and the tape winding 102.

Further, a carbon fiber-reinforced prepreg was wound covering the outer peripheries of the end reinforcement layers 4 and tape winding 102 such that the reinforcement fibers were oriented in the axial direction, thus forming a pipe body 2.

As the carbon fibers in the carbon fiber-reinforced prepreg of the end reinforcement layers 4 and pipe body 2 were used pitch type carbon fibers (available under a trade name "FORCA FT700" by Tonen Corporation). As the matrix resin, an epoxy resin was used. The content of the matrix resin was 35 wt%.

Subsequently, the prepregs were additionally tightened by winding a heat-resistant tape on the outer periphery of the pipe body 2, and then the matrix resin was thermally set in a setting furnace at 140 °C for 120 minutes. After completion of the setting of the matrix resin, the mandrel 100 was withdrawn from the fiber-reinforced plastic pipe,and then the heat-resistant tape on the outer periphery of the pipe body 2 and the tape having been wound on the mandrel 100 were removed.

The fiber-reinforced plastic pipe 1 obtained in this way had a length L' of 300 mm, and the outer diameter of the pipe body 2 was 35.9 mm. The portion of the end reinforcement layers 4 other than the inclined end portion had a thickness T of 0.5 mm and a length L₀ of 50 mm. The overall length of each end reinforcement layer was 75 mm.

Afterwards, an end member 6, of S45C, was fitted in the end reinforcement layer 4 at each end of the fiber-reinforced plastic pipe 1. The small diameter portion of the end member 6 had a diameter of 31.8 mm, and the length H in its axial direction was 40 mm, smaller than the length L of the inner periphery fitting portion of the end reinforcement layer 4. As the adhesive for bonding the end member 6 was used "ARALDITE" manufactured by Ciba-Geigy Ltd.

A cantilever bending rupture test was conducted on the fiber-reinforced plastic pipe 1 with end members thus obtained by supporting one end of the pipe and applying a load on the other end. The result is shown in Table 1 below.

### Comparative Example 1

A pipe having a structure as shown in Fig. 3 was produced by providing a reinforcement layer with reinforcement fibers extending at 90° with respect to the axial direction on the inner periphery of the pipe body 2 in Example 1 over the entire length of the pipe body. The reinforcement layer 4 had an inner diameter of 32 mm and a thickness of 0.5 mm.

A cantilever bending rupture test was conducted on the fiber-reinforced plastic pipe 1 with end members thus obtained in the same manner as in Example 1 by supporting one end of the pipe and applying a load on the other end. The result is shown in Table 1.

### Comparative Example 2

A pipe as shown in Fig. 4 was produced by providing a reinforcement layer 4 with a thickness of 0.7 mm and over 20mm in length from the outer end of the pipe body 2, on the inner periphery of the pipe body 2 in Example 1. As the reinforcement fibers in the fiber-reinforced plastic material used for the reinforcement layer 4 were used the same carbon fibers in Example 1, and as the matrix resin was used an epoxy resin.

A cantilever bending rupture test was conducted on the fiber-reinforced plastic pipe 1 with end members obtained in this way in the same manner as in Example 1. The result is shown in Table 1.

**Table 1**

| | Inner diameter (mm) | Outer diameter (mm) | Length (mm) |
|---|---|---|---|
| Ex. 1 | 32.0 to 33.0 | 35.9 | 300 |
| Comp. Ex. 1 | 32.0 | 35.9 | 300 |
| Comp. Ex. 2 | 33.0 | 35.9 | 300 |

| | Weight (g) | Bending rigidity (kgf mm²) | Bending rupture (kgf^{.}mm) |
|---|---|---|---|
| Ex. 1 | 84 | 1.26 x 10⁸ | 7.2 x 10⁴ |
| Comp. Ex. 1 | 100 | 1.33 x 10⁸ | 7.2 x 10⁴ |
| Comp. Ex. 2 | 74 | 1.26 x 10⁸ | 3.2 x 10⁴ |

As is seen from the results shown in Table 1, the pipe in Comparative Example 1, although lightest in weight, does not have so high bending strength because of presence of points of discontinuity of reinforcement fibers inside it. In contrast, the pipe in Example 1 is 16 % lighter than and has substantially the same strength as the pipe in Comparative Example 1, which has the circumferential reinforcement layer over its entire length.

As has been described in the foregoing, according to the invention it is possible to obtain a pipe-like fiber-reinforced plastic structural material, which is light in weight and has opposite ends having high strength and rigidity. Thus, when end members of metal are secured by adhesive to the opposite ends of the pipe body, increased bonding strength can be obtained because of reduced load on the adhesive. Further, the pipe body may have uni-directional reinforcement fibers extending in the axial direction over the entire pipe length. Further, the inclined inner end surface of the end reinforcement layer disposed in the inner periphery of each end portion of the pipe body has an effect of reducing the stress concentration, and the axial strength is not spoiled.

Further, it is possible to set the length and thickness of the end reinforcement layer as desired to meet the desired mechanical strength.

## Claims

1. A pipe-like fiber-reinforced plastic structural material comprising a fiber-reinforced plastic pipe body in each end of which an end member of metal is fitted, and end reinforcement layers of a fiber-reinforced plastic each provided on the inner periphery of each end portion of said pipe body, said end reinforcement layers having a predetermined thickness and an axial dimension equal to or slightly greater than the axial dimension of the fitted portion of said end members, said end reinforcement layers having an inclined inner end portion with the inner diameter thereof progressively increasing as one goes inward in the axial direction.

2. The pipe-like fiber-reinforced plastic structural material according to claim 1, wherein the degree of inclination of the inclined inner end portion of each end reinforcement layer is in a range of 1/1000 to 1/10.

3. The pipe-like fiber-reinforced plastic structural material according to claim 1, wherein the reinforcement fibers in the fiber-reinforced plastics forming said fiber-reinforced plastic pipe body and end reinforcement layers are one or more fibers selected from the fibers consisting of inorganic fibers, e.g., carbon fibers, boron fibers, glass fibers, alumina fibers, silicon carbide fibers, silicon nitride fibers, etc., organic fibers, e.g., aramid fibers, polyallylate fibers, polyethylene fibers, poyester fibers, etc., and metal fibers, e.g., titanium fibers, amorphous fibers, stainless steel fibers, etc.

4. The pipe-like fiber-reinforced plastic structural material according to claim 3, wherein the fiber-reinforced plastic of said end reinforcement layers incorporates the same reinforcement fibers as in said fiber-reinforced plastic pipe body.

5. The pipe-like fiber-reinforced plastic structural material according to claim 3, wherein the fiber-reinforced plastic of said end reinforcement layers incorporates different reinforcement fibers from those in said fiber-reinforced plastic pipe body.

6. The pipe-like fiber-reinforced plastic structural material according to claim 3, wherein the fiber-reinforced plastic of said end reinforcement layers incorporates at least the reinforcement fibers disposed at ± (80 to 90)° with respect to the axial direction.

7. A method of manufacturing a pipe-like fiber-reinforced plastic structural material comprising the steps of:
(a) preparing a mandrel and winding a releasable tape thereon to form a tape winding having a central portion with a predetermined thickness and inclined end portions with the thickness thereof reducing progressively as one goes outward in the axial direction;
(b) subsequently winding a fiber-reinforced prepreg on said inclined end portions of said tape winding formed on said mandrel and outer portions thereof adjacent said inclined end portions to the same outer diameter as said central portion of said tape winding, thus forming end reinforcement layers having a predetermined axial dimension;
(c) then winding a fiber-reinforced prepreg to a predetermined thickness on said end reinforcement layers and the exposed central portion of said tape winding, thus forming a pipe body; and
(d) then thermally setting the matrix resin in said fiber-reinforced prepregs, withdrawing said mandrel from the hardened fiber-reinforced plastic materials and removing the tape of said tape winding from the inside of said hardened fiber-reinforced plastic materials.

8. The method of manufacturing a pipe-like fiber-reinforced plastic structural material according to claim 7, wherein said releasable tape is made of a thermoplastic resin, e.g., polypropyrene, polyethylene, PET, Teflon, etc.
